# EUROPÄISCHE PATENTANMELDUNG

(11) **EP 3 338 594 A1**
(43) Veröffentlichungstag der Anmeldung: **27.06.2018**
(21) Anmeldenummer: 17208735.5
(22) Anmeldetag: 20.12.2017
(51) Int. Cl.: A47B 13/08, A47B 95/04, A47B 96/20, B32B 27/00

(54) **PROFILANORDNUNG**

(30) Priorität: 23.12.2016 DE 202016107322 U
(71) Anmelder: REHAU AG + Co, 95111 Rehau (DE)
(72) Erfinder: Krämer, Uwe, 95111 Rehau (DE)

(57) **Zusammenfassung**

Die Erfindung betrifft eine Profilanordnung (1) für die Anbringung an einem Werkstück, insbesondere zur Befestigung an der Stirnseite von Möbelbauplatten (2), umfassend eine Strukturschicht (3), wenigstens teilweise eine Funktionsschicht (4) sowie wenigstens eine Dekorschicht (5, 6), sich dadurch auszeichnet, dass die Dekorschicht wenigstens teilweise über die Funktionsschicht, die an ihrer der Dekorschicht zugewandten Oberfläche eine Rauhtiefe nach DIN EN ISO 4287 von etwa 5 µm bis etwa 250 µm, vorzugsweise 10 µm bis 100 µm aufweist, von der Strukturschicht, die an ihrer der Funktionsschicht zugewandten Oberseite eine im Wesentlichen glatte Oberfläche aufweist, beabstandet angeordnet ist, sowie ein Werkstück, insbesondere eine Möbelbauplatte mit einer derartigen Profilanordnung.

## Beschreibung

Die Erfindung betrifft eine Profilanordnung für die Anbringung an einem Werkstück, insbesondere zur Befestigung an einer Stirnseite von Möbelplatten, umfassend eine Strukturschicht, wenigstens teilweise eine Funktionsschicht sowie wenigstens eine Dekorschicht, sowie ein Werkstück, insbesondere eine Möbelbauplatte mit einer derartigen Profilanordnung.

Derartige Profilanordnungen sind aus dem Stand der Technik bekannt und werden teilweise auch als Kantenleiste, Deckleiste, Kantenband bzw. Umleimer bezeichnet.
Diese Profilanordnungen im Stand der Technik werden dazu verwendet, die Schmalflächen bzw. Stirnseiten von Werkstücken, insbesondere von Möbelbauplatten bzw. Arbeitsbauplatten zu beschichten und damit sowohl zu schützen als auch zu dekorieren.
Derartige Möbelbauplatten bestehen im Allgemeinen aus Holzwerkstoffen bzw. Holzersatzwerkstoffen.
Die Befestigung der Profilanordnung an den jeweiligen Möbelbauplatten erfolgt in bekannter Weise über an sich bekannte Schmelzklebstoffe oder polymere Funktionsschichten.

So ist beispielsweise in der EP 0 857 442 B1 eine derartige, als Profilleiste bezeichnete, Profilanordnung sowie ein Verfahren zu ihrer Herstellung offenbart.
Diese Profilleiste, insbesondere Kantenleiste für die Möbelindustrie, aus Kunststoff weist einen Leistenkern aus einer durchsichtigen Kunststoffleiste bzw. einem Leistenkern sowie einer Dekor- und / oder Farbbeschichtung an der Unterseite der Kunststoffleiste auf. Weiterhin sind die längsrandseitigen Sichtkanten der Kunststoffleiste nachträglich profiliert. Die Dekorbeschichtung bleibt somit durch den transparenten Leistenkörper hindurch sichtbar. Weiterhin kann die Oberseite und / oder die Unterseite der transparenten Kunststoffleiste eine Prägung aufweisen.

Nachteilig bei dieser Profilanordnung ist jedoch, dass insbesondere für das Aufbringen unterschiedlicher Arten, Geometrien bzw. Formen der Prägungen jeweils separate Präge- bzw. Werkzeugsysteme erforderlich sind, sodass die Herstellung derartige Profilanordnungen aufwendig und vor allem sehr unflexibel ist.
Die für die Oberfläche der Profilanordnung zu erzielenden Haptik bzw. Optik ist durch die nachträglich auf die Oberseite der Profilanordnung aufgebrachte Prägung verantwortlich, die dann auch noch nachteiligerweise durch eine nachträgliche Haftvermittler-, Bedruckungs- und / oder Lackschicht nochmals modifiziert bzw. beeinflusst wird.
Dies führt nochmals zu einer unvorteilhaft aufwendigen und vor allem sehr unflexiblen Fertigung bei den vielen im Stand der Technik bekannten Dekoren derartiger Profilanordnungen.

Hier setzt die Erfindung ein, die sich die Aufgabe gestellt hat, eine Profilanordnung aufzuzeigen, die die Nachteile des Standes der Technik überwindet, die wirtschaftlich und kostengünstig herstellbar ist, die sich durch eine Vielzahl von einfach und flexibel einzubringenden Oberflächendesigns bzw. Haptiken auszeichnet, welche die bisherigen Qualitätsabhängigkeiten herkömmlicher Prägungen eliminiert und die Erzeugung von Haptiken bzw. Strukturen ohne zusätzliche Präge- bzw. Werkzeugsysteme ermöglicht, sowie eine Möbelbauplatte mit einer derartigen Profilanordnung.

Erfindungsgemäß wird dies durch eine Profilanordnung mit den Merkmalen des Anspruches 1 realisiert. Weitere vorteilhafte Ausgestaltungen sind in den Unteransprüchen beschrieben.

Es konnte überraschend festgestellt werden, dass eine Profilanordnung für die Anbringung an einem Werkstück, insbesondere zur Befestigung an der Stirnseite von Möbelbauplatten, umfassend eine Strukturschicht, wenigstens teilweise eine Funktionsschicht sowie wenigstens eine Dekorschicht, sich dadurch auszeichnet, dass die Dekorschicht wenigstens teilweise über die Funktionsschicht, die an ihrer der Dekorschicht zugewandten Oberfläche eine Rauhtiefe nach DIN EN ISO 4287 von etwa 5 µm bis etwa 250 µm, vorzugsweise 10 µm bis 100 µm aufweist, von der Strukturschicht, die an ihrer der Funktionsschicht zugewandten Oberseite eine im Wesentlichen glatte Oberfläche aufweist, beabstandet angeordnet ist. Durch die vorteilhafte Aufbringung einer separaten Funktionsschicht auf der Strukturschicht durch beispielsweise Verfahren wie Lasersintern, Ink-Jet und dergleichen ist eine universell einsetzbare Profilanordnung herstellbar, die die erforderliche Haptik bzw. das erforderliche Design aufweist und die in weiteren Bearbeitungsschritten mit zusätzlichen Hilfs- bzw. auch Dekorschichten applizierbar ist.

In dieser vorteilhaften Ausgestaltung der erfindungsgemäßen Profilanordnung ist dieses in der erforderlichen Haptik durch die Funktionsschicht bereitstellbar, welche nachträglich durch eine Dekorschicht in Form beispielsweise einer Bedruckung das notwendige Design erhält, welches beispielsweise zusätzlich noch durch eine weitere Dekorschicht in Form einer an sich bekannten Lackierung überdeckbar und somit schützbar ist.
Mit der erfindungsgemäßen Profilanordnung ist es somit erstmals möglich, die erforderliche Haptik bzw. das erforderliche Design sowohl in einem Online-Prozess wie beispielsweise der Extrusion, der Coextrusion bzw. der Postcoextrusion in der gewohnten Qualität ohne die Verwendung zusätzlicher Präge- bzw. Werkzeugsysteme zur Verfügung zu stellen. Weiterhin ist es jedoch überraschenderweise auch möglich, die erfindungsgemäße Profilanordnung mit der bereits aufgebrachten und profilierten Funktionsschicht im beispielsweise Extrusionsverfahren, Coextrusions- bzw. Postcoextrusionsverfahren herzustellen und ohne die Finalisierung mit der bzw. den Dekorschichten für spätere Veredelungen zu lagern.

Die erfindungsgemäße Anordnung zeichnet sich weiterhin dadurch aus, dass die Strukturschicht und die Funktionsschicht sowie die Dekorschicht einstückig miteinander verbunden sind. Hierdurch lässt sich die erfindungsgemäße Profilanordnung wirtschaftlich und kostengünstig sowohl im Online-Verfahren als auch im Offline-Verfahren herstellen.

Ein weiterer Vorteil der erfindungsgemäßen Profilanordnung besteht darin, dass an der, der Funktionsschicht gegenüberliegend angeordneten, Seite der Strukturschicht wenigstens eine Haftvermittlerschicht und / oder eine Schmelzschicht angeordnet ist. In dieser vorteilhaften Ausgestaltung der erfindungsgemäßen Profilanordnung kann diese einerseits über an sich bekannte Schmelzklebstoffsysteme an den jeweiligen Stirnseiten von Möbelbauplatten fixiert werden. Es besteht jedoch weiterhin die Möglichkeit, die erfindungsgemäße Profilanordnung mit geeigneten Quellen (z.B. Laserstrahlung, Mikrowelle, Heißluft, Plasmastrahlung und dergleichen) aufzuschmelzen und stoffschlüssig mit der jeweiligen Stirnseite der Möbelbauplatte zu verbinden.
Die erfindungsgemäße Profilanordnung kann aber auch in dem bereits im Stand der Technik bekannten Verfahren an die Stirnseiten von Möbelbauplatten angebracht werden, in dem auf die an der Strukturschicht angeordnete Haftvermittlerschicht ein geeigneter Schmelzklebstoff aufbringbar, thermisch aktivierbar und somit die stoffschlüssige Verbindung realisierbar ist.
Ein weiterer Vorteil der erfindungsgemäßen Profilanordnung besteht darin, dass die Strukturschicht und/oder die Schmelzschicht auf Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien basiert. Dabei können dem polymeren Werkstoff der Strukturschicht geeignete Füll-und / oder Verstärkungsstoffe beigemischt sein, die die mechanischen Eigenschaften positiv beeinflussen insbesondere Glasfasern, Glaskugeln aber auch Füllstoffe wie Kreide, Talkum und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten.

Weiterhin ist die erfindungsgemäße Profilanordnung vorteilhafterweise so ausgebildet, dass der Werkstoff der Funkionsschicht und/oder der Strukturschicht wenigstens eines der folgenden Additive enthält: Stabilisatoren zur Verbesserung der Beständigkeit gegen Lichteinwirkung, UV-Strahlung und Bewitterung; Stabilisatoren zur Verbesserung der acidolytischen Beständigkeit, Gleitmittel, Entformungshilfen, farbgebende Additive, kristallisationsregulierende Substanzen und Nukleierungsmittel, Schlagzähmodifier, Füllstoffe und / oder Weichmacher. Somit kann eine erfindungsgemäße Kantenleiste zur Verfügung gestellt werden, die einerseits wirtschaftlich und kostengünstig herstellbar ist, die aber auch die bisher aus dem Stand der Technik bekannten Haftfestigkeitswerte bzw. Schälfestigkeitswerte sowie die insbesondere für Möbelstücke wichtige Wasserbeständigkeit wesentlich verbessert.

Es hat sich weiterhin als vorteilhaft bei der erfindungsgemäßen Profilanordnung herausgestellt, dass die Funktionsschicht durch Inkjet und / oder Bedruckung auf die Strukturschicht aufbringbar ist. Durch diese verschiedenen Variationen kann eine erfindungsgemäße Profilanordnung zur Verfügung gestellt werden, sie sowohl wirtschaftlich als auch kostengünstig herstellbar ist, als auch die Möglichkeit aufweist, die erforderlichen unterschiedlichsten Haptiken bzw. auch Designs derartiger Profilanordnungen problemlos und ohne zusätzliche Zurverfügungstellung von Präge- und / oder Werkzeugsystemen realisiert.

Dabei hat es sich als vorteilhaft gezeigt bei der erfindungsgemäßen Profilanordnung, dass nach der Zurverfügungstellung der Strukturschicht und einer möglichen weiteren Vorbehandlung bzw. Primerung nun die Funktionsschicht in der gewünschten Form, Größe, Haptik, Farbe, Struktur auf die Strukturschicht aufgebracht und über geeignete Quellen wie beispielsweise einen Laser fixierbar ist.
Diese erfindungsgemäße Profilanordnung kann nun im Online-Prozess durch eine weitere beispielsweise Primerung und / oder Aufbringung einer Dekorschicht wie beispielsweise im Tiefdruckverfahren oder im Digitaldruckverfahren weiter veredelt werden. Auch eine zusätzliche Lackierung dieser dekorierten Oberfläche durch an sich bekannte UV-beständige Lacke ist realisierbar.

Es hat sich weiterhin als vorteilhaft bei der erfindungsgemäßen Profilanordnung herausgestellt, dass nach der Zurverfügungstellung der Strukturschicht der Profilanordnung auf deren Oberfläche eine Vorbehandlung bzw. Primerung möglich bzw. realisierbar ist, das anschließend die Funktionsschicht über Ink-Jet-Düsen im an sich bekannten Ink-Jet-Druckverfahren aufbringbar sind und das die damit erzeugte Struktur, Haptik, Oberfläche, Design nach einer anschließenden Trocknung bzw. UV-Härtung bereits die erforderliche Haptik, Struktur, Oberfläche, Design der erfindungsgemäßen Profilanordnung aufweist. Diese kann nun durch beispielsweise eine Primerung und / oder Aufbringung einer Dekorschicht im an sich bekannten Tiefdruckverfahren oder im Digitaldruckverfahren nun mit der erforderlichen Optik, dem erforderlichen Design versehen und ggf. durch eine weitere zusätzliche Dekorschicht in Form eines UV-beständigen Lackes geschützt werden.

Ein weiterer Vorteil der erfindungsgemäßen Profilanordnung besteht darin, dass die Funktionsschicht einstückig durch ein generatives Fertigungsverfahren auf die Strukturschicht aufbringbar ist. Vorteilhafterweise sind diese generativen Fertigungsverfahren (auch 3D-Druck genannt) ebenfalls in der Lage, eine erfindungsgemäße Profilanordnung zur Verfügung zu stellen, die wirtschaftlich und kostengünstig herstellbar ist und die bereits auf der Strukturschicht eine Funktionsschicht aufweist, die die erforderliche Haptik, Oberfläche, Design und dergleichen aufweist.

Ein weiterer Vorteil der erfindungsgemäßen Profilanordnung besteht darin, dass die Funktionsschicht zumindest teilweise transparent bzw. transluzent ausgebildet ist. Hierdurch ist es möglich, eine erfindungsgemäße Profilanordnung zur Verfügung zu stellen, die bereits das in der Strukturschicht integrierte Design übernimmt und nur die zusätzlich zur Verfügung zu stellende Oberfläche, Haptik und dergleichen realisiert.

Die erfindungsgemäße Profilanordnung zeichnet sich weiterhin dadurch aus, dass an der, der Funktionsschicht gegenüberliegend angeordneten Oberfläche der Dekorschicht eine weitere Deckschicht angeordnet ist. In dieser vorteilhaften Ausgestaltung der erfindungsgemäßen Profilanordnung kann die durch die Funktionsschicht definierte Struktur, Haptik, Oberfläche und dergleichen, welche über eine geeignete Dekorschicht im Design variierbar ist, zusätzlich vor äußeren Einflüssen wie beispielsweise mechanischen Belastungen und / oder UV-Einwirkungen geschützt werden.

Die erfindungsgemäße Profilanordnung ist vorteilhafterweise so ausgebildet, dass die Schmelzschicht über eine Haftvermittlerschicht von der Strukturschicht beabstandet angeordnet ist. Die erfindungsgemäße Profilanordnung ist durch diesen vorteilhaften Aufbau wirtschaftlich und kostengünstig herstellbar sowie in ihrem späteren Einsatz zur Beschichtung der Stirnseite einer Möbelplatte auch einfach und problemlos befestigbar.

Es hat sich ebenfalls als vorteilhaft herausgestellt bei der erfindungsgemäßen Profilanordnung, dass die Schmelzschicht direkt stoffschlüssig mit der Strukturschicht verbunden ist. Hierdurch kann eine erfindungsgemäße Profilanordnung zur Verfügung gestellt werden, die sowohl wirtschaftlich als auch kostengünstig herstellbar ist und die ebenfalls äußerst wirtschaftlich und die Stirnseite der Möbelbauplatten absolut abdichtend an dieser über geeignete thermische Quellen fixierbar ist.

Die Erfindung betrifft weiterhin ein Werkstück, insbesondere eine Möbelbauplatte mit einer Profilanordnung gemäß einer der obigen Ausführungen.

Die erfindungsgemäße Profilanordnung soll nun an diesen nicht einschränkenden Ausführungsbeispielen näher beschrieben werden.

Es zeigen:
- Fig. 1:: perspektivische Schnittdarstellung einer erfindungsgemäßen Profilanordnung;
- Fig. 2:: perspektivische Schnittdarstellung einer Profilanordnung mit einer Möbelbauplatte.

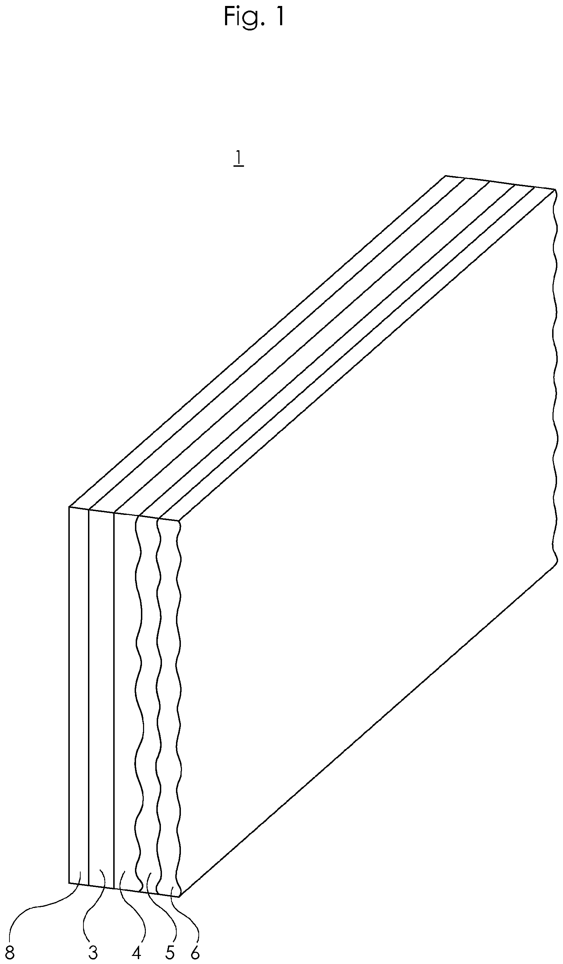

In der Fig. 1 ist eine perspektivische Schnittdarstellung einer erfindungsgemäßen Profilanordnung 1 dargestellt.

Die Profilanordnung 1 umfasst eine Strukturschicht 3, eine Funktionsschicht 4 sowie die Dekorschicht 5.

An der der Dekorschicht 5 gegenüberliegenden Seite der Strukturschicht 3 ist eine Schmelzschicht 8 angeordnet. Die Strukturschicht 3 sowie die Schmelzschicht 8 der Profilanordnung 1 bestehen aus einem polymeren Werkstoff Polypropylen (PP).

Auf die der Schmelzschicht 8 gegenüberliegend angeordneten Seite der Strukturschicht 3 ist die Funktionsschicht 4 angeordnet, die an ihrer zur Dekorschicht zugewandten Oberfläche eine Rauhtiefe nach DIN EN ISO 4287 von etwa 5 bis 250 µm, vorzugsweise 10 bis 100 µm, in diesem Ausführungsbeispiel etwa 35 µm aufweist.

Die Funktionsschicht 4 der Profilanordnung 1 ist in diesem Ausführungsbeispiel mit einer nachträglich durch Präge- bzw. Werkzeugsysteme eingebrachte Oberfläche ausgebildet. Auf der Funktionsschicht 4 ist die Dekorschicht 5 angeordnet, die an ihrer der Funktionsschicht zugewandten Oberseite eine im Wesentlichen glatte Oberfläche aufweist. Die Dekorschicht 5 welche im Allgemeinen aus einer flüssigen Phase auf die auf der Strukturschicht 3 angeordnete Funktionsschicht 4 aufgebracht ist, weist eine Schichtdicke von etwa 25 µm auf und übernimmt die in der Funktionsschicht 4 der Profilanordnung 1 eingebrachte Oberflächenstruktur.

Bei der Profilanordnung 1 ist die Strukturschicht 3, die Funktionsschicht 4 sowie die Dekorschicht 5 einstückig miteinander verbunden.

In diesem Ausführungsbeispiel ist die Funktionsschicht 4 durch Bedruckung auf die Strukturschicht 3 aufgebracht, durch ein Ink-Jet-Druckverfahren.

Die Strukturschicht 3 der Profilanordnung 1 weist auf ihrer der Schmelzschicht 8 gegenüberliegenden Oberseite eine vollflächig aufgebrachte Funktionsschicht 4 auf, die in diesem Ausführungsbeispiel durch zusätzliche Farbpartikel bzw. Additive eingefärbt ist.
Es liegt jedoch auch im Rahmen der Erfindung, dass die Funktionsschicht 4 der Profilanordnung 1 transparent bzw. transluzent ausgebildet ist.

Die Profilanordnung 1 in diesem Ausführungsbeispiel ist aufgrund ihrer Struktur bzw. ihres Aufbaus wirtschaftlich und kostengünstig herstellbar und kann somit allen Anforderungen an die Oberfläche, die Haptik bzw. das Design von Profilanordnungen für die Anbringung an den Stirnseiten von Möbelbauplatten jederzeit angepasst werden.
Hierzu kann einerseits die Form, Farbe, Dicke bzw. Beschaffenheit der Funktionsschicht 4 und / oder die Form, Farbe, Dicke, Beschaffenheit der Dekorschicht 5 den entsprechenden haptischen bzw. optischen Anforderungen an die zu bestückenden Möbelbauplatten angepasst werden.

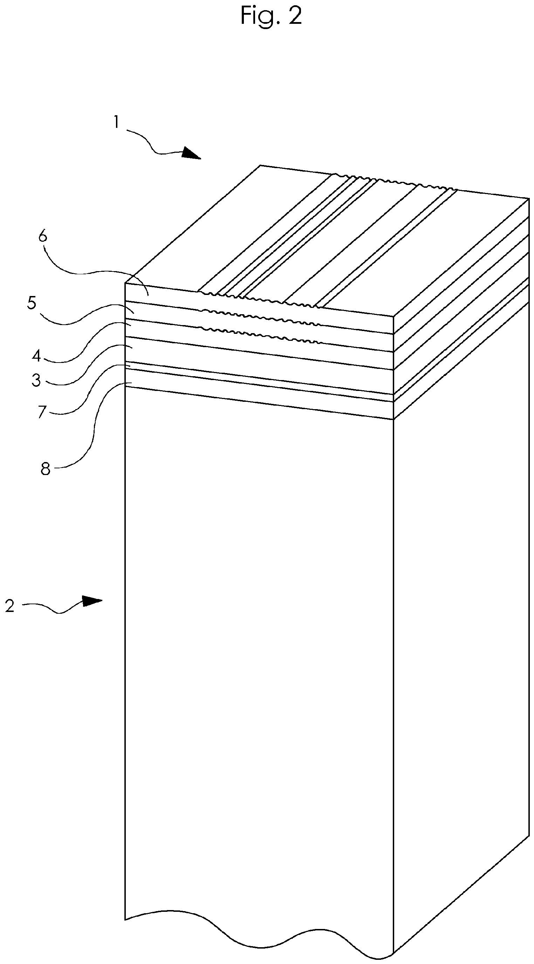

In der Fig. 2 ist eine perspektivische Schnittdarstellung einer erfindungsgemäßen Profilanordnung 1 mit einer Möbelbauplatte 2 dargestellt.

An einer Stirnseite der Möbelplatte 2 ist die Profilanordnung 1 angeordnet.
Die Profilanordnung 1 umfasst eine Strukturschicht 3, eine Funktionsschicht 4 sowie eine Dekorschicht 5, 6. Die Dekorschicht 5, 6 ist wenigstens teilweise über die Funktionsschicht 4, die an ihrer der Dekorschicht 5, 6 zugewandten Oberfläche eine Rauhtiefe nach DIN EN ISO 4287 von etwa 5 bis 250 µm, vorzugsweise 10 bis 100 µm, in diesem Ausführungsbeispiel etwa 40 µm aufweist, von der Strukturschicht 3, die an ihrer der Funktionsschicht 4 zugewandten Oberseite eine im Wesentlichen glatte Oberfläche aufweist, beabstandet angeordnet.

Dabei sind die Strukturschicht 3, die Funktionsschicht 4 sowie die Dekorschicht 5, 6 an der Profilanordnung 1 einstückig miteinander verbunden.
Die Profilanordnung 1 ist weiterhin so ausgebildet, dass an der der Funktionsschicht 4 gegenüberliegend angeordneten Seite der Strukturschicht 3 eine Haftvermittlerschicht 7 sowie eine Schmelzschicht 8 angeordnet sind.
Die Haftvermittlerschicht 7 der Profilanordnung dient dazu, dass die Schmelzschicht 8 einen festen Verbund mit der Strukturschicht 3 eingeht.

Über die Schmelzschicht 8 ist die Profilanordnung 1 stoffschlüssig mit der Stirnseite der Möbelbauplatte 2 über einen adhäsiven Verbund fixiert.

In diesem Ausführungsbeispiel ist die Profilanordnung 1 so ausgebildet, dass die Funktionsschicht 4 durch Lasersintern auf die Strukturschicht 3 so aufgebracht ist, dass die der Dekorschicht zugewandte Oberfläche eine Rauhtiefe nach DIN EN ISO 4287 von etwa 55 µm aufweist. Weiterhin ist die Funktionsschicht 4 so ausgebildet, dass sie in diesem Ausführungsbeispiel transparent ist.

Auf die so strukturierte Funktionsschicht 4 ist die Dekorschicht 5 aufgebracht, welche in diesem Ausführungsbeispiel als ein transparenter Lack ausgebildet ist, der bspw. in Hochglanz- Ausführung ausgebildet ist.

Die erfindungsgemäße Profilanordnung ist weiterhin so ausgebildet, dass in diesem Ausführungsbeispiel die Dekorschicht 5 über eine zusätzliche Dekorschicht 6, welche in diesem Ausführungsbeispiel als UV-beständiger Lack ausgebildet ist, vor äußeren Einflüssen geschützt ist.

Es liegt jedoch auch im Rahmen der Erfindung, dass zwischen der Strukturschicht 3 und der Funktionsschicht 4 sowie zwischen der Funktionsschicht 4 und der Dekorschicht 5, 6 zusätzliche, hier nicht dargestellte, Haftvermittlerschichten aufgebracht sind.

In diesem Ausführungsbeispiel ist die Funktionsschicht 4 der Profilanordnung so ausgebildet, dass sie nur partiell über eine der Dekorschicht 5, 6 zugewandte Oberfläche mit einer Rauhtiefe nach DIN EN ISO 4287 von 40 µm aufweist, die in diesem Ausführungsbeispiel von den Längsrandseiten beabstandet nur im Mittelteil eingebracht sind.

Es liegt weiterhin im Rahmen der Erfindung, dass die Funktionsschicht 4 der Profilanordnung 1 auch nur partiell an beispielsweise den Längskanten der Strukturschicht 3 oder regelmäßig, alternierend verteilt und statistikverteilt auf der Strukturschicht 3 angeordnet ist. Dies ist abhängig von den jeweiligen haptischen bzw. designerischen Anforderungen an die Profilanordnung 1.

## Patentansprüche

1. Profilanordnung (1) für die Anbringung an einem Werkstück, insbesondere zur Befestigung an den Stirnseiten von Möbelbauplatten (2), umfassend eine Strukturschicht (3), wenigstens teilweise eine Funktionsschicht (4) sowie wenigstens eine Dekorschicht (5, 6), **dadurch gekennzeichnet, dass** die Dekorschicht (5, 6) wenigstens teilweise über die Funktionsschicht (4), die an ihrer der Dekorschicht (5, 6) zugewandten Oberfläche eine Rauhtiefe nach DIN EN ISO 4287 von etwa 5 µm bis 250 µm, vorzugsweise 10 µm bis 100 µm aufweist, von der Strukturschicht (3), die an ihrer der Funktionsschicht (4) zugewandten Oberseite eine im Wesentlichen glatte Oberfläche aufweist, beabstandet angeordnet ist.

2. Profilanordnung (1) nach Anspruch 1, **dadurch gekennzeichnet, dass** die Strukturschicht (3) und die Funktionsschicht (4) sowie die Dekorschicht (5, 6) einstückig miteinander verbunden sind.

3. Profilanordnung (1) nach einem der vorhergehenden Ansprüche, **dadurch gekennzeichnet, dass** an der der Funktionsschicht (4) gegenüberliegend angeordneten Seite der Strukturschicht (3) wenigstens eine Haftvermittlerschicht (7) und / oder eine Schmelzschicht (8) angeordnet ist.

4. Profilanordnung (1) nach einem der vorhergehenden Ansprüche, **dadurch gekennzeichnet, dass** die Funktionsschicht (4) durch Inkjet und / oder Bedruckung auf die Strukturschicht (3) aufbringbar ist.

5. Profilanordnung (1) nach einem der vorhergehenden Ansprüche, **dadurch gekennzeichnet, dass** die Funktionsschicht (4) einstückig durch Lasersintern und/oder ein generativen Fertigungsverfahrens auf die Strukturschicht (3) aufbringbar ist.

6. Profilanordnung (1) nach einem der vorhergehenden Ansprüche, **dadurch gekennzeichnet, dass** die Funktionsschicht (4) zumindest teilweise transparent bzw. transluzent ausgebildet ist.

7. Profilanordnung (1) nach einem der vorhergehenden Ansprüche, **dadurch gekennzeichnet, dass** die Schmelzschicht (8) über eine Haftvermittlerschicht (7) von der Strukturschicht (3) beabstandet angeordnet ist.

8. Profilanordnung (1) nach einem der vorhergehenden Ansprüche, **dadurch gekennzeichnet, dass** die Schmelzschicht (8) stoffschlüssig mit der Strukturschicht (3) verbunden ist.

9. Werkstück, insbesondere Möbelbauplatte (2) mit wenigstens einer Profilanordnung (1) gemäß einem der Ansprüche 1 bis 8.
